# EUROPÄISCHE PATENTSCHRIFT

(11) **EP 0 363 773 B1**
(45) Veröffentlichungstag und Bekanntmachung des Hinweises auf die Patenterteilung: **26.01.1994**
(21) Anmeldenummer: 89118197.6
(22) Anmeldetag: 30.09.1989
(51) Int. Cl.: A01G 13/02

(54) **Mulchmatte zum Abdecken von Kulturen**
Mulch mat for covering cultures
Paillasson pour recouvrir des cultures

(30) Priorität: 14.10.1988 DE 3835129
(43) Veröffentlichungstag der Anmeldung: 18.04.1990
(73) Patentinhaber: MST- DRÄNBEDARF GmbH, D-27239 Twistringen (DE)
(72) Erfinder: Stöver, Herrmann, D-2832 Twistringen (DE); Meyer, Alfons, D-2832 Twistringen (DE)
(74) Vertreter: Bischof, Hans-Jochen, Dipl.-Ing.

(56) Entgegenhaltungen:
- DE-A- 2 729 405
- US-A- 3 870 583
- US-A- 3 998 006

## Beschreibung

Die Erfindung bezieht sich auf eine Mulchmatte zum Abdecken von Kulturen zur Verbesserung der Bodenverhältnisse und des Pflanzenwachstums bestehend aus geschichteten Materialien, wie Pflanzenfasern und Folien bzw. Vlies.

Neuanpflanzungen, insbesondere in der Forstwirtschaft und im Gartenbau, unterliegen stark den Natureinflüssen. Das Wachstum wird wesentlich beeinträchtigt durch Aufkeimen des Unkrauts und durch eine fehlende Feuchtigkeit, insbesondere dann, wenn die Pflanzungen starken Sonneneinstrahlungen ausgesetzt sind. Die Unkrautbekämpfung erfolgte bisher auf chemischem Wege. Diese Art der Bekämpfung ist wenig umweltfreundlich und wird in zunehmendem Maße unterbunden werden. Man ist daher dazu übergegangen, Bodenabdeckungen vorzusehen, durch die das Aufkeimen von Unkraut vermieden werden soll. Zunächst wurden Bodenabdeckungen, wie z. B. das Einsetzen niederer Pflanzen, erprobt, die sich jedoch als nachteilig erweisen, indem sie dem Boden Nährstoffe entziehen. Man ist dazu übergegangen, Reisigabdeckungen vorzusehen oder Strohabdeckungen aufzubringen. Alle diese Materialien sollten dazu dienen, den Konkurrenzbewuchs in den Pflanzenreihen nieder zu halten, das Keimklima zu verbessern, die krümelige Bodenstruktur weitestgehend zu erhalten, eine Beschattung der Pflanzenreihen zu schaffen und die Luftzirkulation am Boden zu verbessern und vor allem die Feuchtigkeit dem Boden weitestgehend zu erhalten.

Die Anforderungen, die an das Abdeckungsmaterial gestellt werden, sind unterschiedlich und abhängig vom Pflanzenwachstum. In der Forstwirtschaft wird in der Regel erwartet, daß die Bodenabdeckung einen Zeitraum von drei bis vier Vegetationszeiten übersteht. Im Gartenbau dagegen wird sich dieses auf ein bis zwei Vegetationszeiten beschränken lassen. Nach Ablaufen dieser Vegetationszeiten wird erwartet, daß das Material der Bodenabdeckung verrottbar ist, damit eine Entsorgung entfällt. Bei den bekannten Mulchverfahren hat sich gezeigt, daß Stroh besonders günstig ist, da es nach drei bis vier Jahren abgebaut, d. h. verrottet ist. Der Nachteil ist das Aufbringen des Strohs, das möglichst gleichmäßig auf den Boden verteilt werden muß, wobei man von ca. 4 kg/m² ausgeht und ferner, daß mit der entstehenden Verrottung auch das Aufkeimen von Unkraut eine zwangsläufige Folge ist.

Aus diesem Grund wurde eine Folienmulchung eingeführt, d. h. der Boden wurde mit einer schwarzen Folie abgedeckt. Die lichtundurchlässige Folie läßt das Aufkeimen von Unkraut erst gar nicht entstehen, hat aber den Nachteil, daß die verhältnismäßig dicke Folie selbst nicht oder kaum abbaut und daß eine nachträgliche Entsorgung notwendig wird. Außerdem ist bei der Folienmulchung die Versorgung der Pflanzen mit Düngemittein nicht mehr ordnungsgemäß gewährleistet, und Regenwasser wird weitestgehend abgeleitet. Damit ist eine gleichmäßige Befeuchtung des Bodens nicht mehr gegeben.

Im nächsten Schritt hat man daher Mulchmatten eingesetzt, die zunächst aus reinem Naturmaterial gefertigt waren. Diese Mulchmatten, vornehmlich aus Stroh gepreßt, haben drei bis fünf Vegetationsperioden überstanden und keine Entsorgungsschwierigkeiten erbracht. Der Nachteil ist aber auch, daß mit zunehmender Verrottung das Aufkeimen von Unkräutern gegeben ist und daß sie ferner als lichtdurchlässiges Material nicht überall eingesetzt werden können, insbesondere nicht bei Quecken, Reibgras und Disteln. Außerdem wachsen überall, wo das Licht durch die Matte dringt, die Unkräuter durch.

Es ist ferner bekannt:
- Eine Pflanzenzuchtunterlage aus einem krümeligen Pflanzensubstrat und mindestens einer einseitig vorgesehenen ganzflächigen wasserdurchlässigen Deckschicht zu bilden - DE A 2729405 -. Die Schichten werden mittels Fäden zusammengehalten.
   Diese Matte bietet keine Gewähr dafür, daß an den durch die Fäden verursachten Löchern Licht auf den darunterliegenden Boden fällt und somit Unkräuter aufkeimen und durch die Löcher hindurchwachsen.
- Eine Pflanzenzuchtunterlage gem. - US-A 3,998,006 - zu erstellen, die sich auf eine perforierte, flexible Kunststoffbahn bezieht, die auf einer Zellulosefaserbahn aufgebracht ist. Diese Bahn wird mit der Zellulosefaserbahn auf den Boden aufgebracht, so daß die Kunststoffbahn oben aufliegt. Durch die Perforation der Kunststoffbahn läßt sich ebenfalls nicht vermeiden, daß Licht durch die Matte dringt und damit das Aufkeimen der Unkräuter fördert.
- Eine Pflanzenzuchtunterlage in Form eines undurchsichtigen Mulchteppichs herzustellen - US-A 3,870,583 -. Hier wird ein organisches Material mit einem Harzbinder zu einer festen Masse vermischt. Anschließend wird die Masse in Formwalzen plattenförmig verformt, und auf die so gebildete Mulchmatte wird dann eine reißfeste synthetische Schicht aus nicht verrottbarem Material aufgebracht.

Der Aufwand zur Herstellung solcher Matten ist relativ groß. Außerdem muß die Matte zum Teil nach Gebrauch wieder entsorgt werden. Darüber hinaus ist fraglich, ob der gewünschte Erfolg der Unkrautvernichtung gegeben ist, da offensichtlich durch die poröse Deckschicht noch genügend Licht hindurchdringen kann. Keime von Unkräutern werden mit Sicherheit in das auf dem Boden liegende organische Material eindringen und durch die Matte hindurchwachsen.

Der Erfindung liegt somit die Aufgabe zugrunde, eine Mulchmatte zu schaffen, die allen Bedürfnissen gerecht wird. Sie soll wasserdurchlässig sein, eine Düngung gestatten und das Aufkeimen von Unkraut verhindern. Außerdem soll die Entsorgung entfallen. Die aus Schichten aufgebaute Matte hat darüber hinaus aber auch die Aufgabe, das Wachstum der Pflanzen zu fördern, nicht nur durch Unterbinden des Aufkeimens der Kräuter, sondern auch einen günstigen Wärmestau am Boden hervorzurufen und die Feuchtigkeit am Boden festzuhalten. Diese Aufgabe wird durch die in dem Anspruch 1 enthaltenen Merkmale gelöst.

Nach der Erfindung ist eine Mulchmatte vorgesehen, die aus verschiedenen Materialien schichtweise aufgebaut ist. Abwechselnd werden organische - das sind Pflanzenfasern - und synthetische - das sind Folien oder Vlies - Materialien geschichtet. Damit ergibt sich der Vorteil, daß die organischen Materialien entsprechend dem Einsatz ausgewählt werden können. Der Verrottung unterliegt in erster Linie die oberste Schicht. Dementsprechend wirkt sich der Aufbau aus organischem und synthetischem Material besonders günstig aus. Das synthetische Material muß jedoch so aufbereitet sein, daß es feuchtigkeitsdurchlässig ist. Nur dann ist gewährleistet, daß Regenwasser oder auch Gießwasser auf den Boden durchkommt. Durch das oben aufliegende organische Material wird zusätzlich dafür gesorgt, daß das Wasser nicht abfließen kann. Das Einbringen von Düngemitteln wird ebenfalls gewährleistet, wenn die synthetische Folie wasserdurchlässig ist. Entweder wird Flüssigdünger verwendet oder anderer Dünger durch die Feuchtigkeit durchgespült.

Ein weiterer Vorteil der Erfindung wird dadurch gegeben, daß die Schichten der Matte zunächst miteinander versteppt sind. Die Nähstiche lassen sich variieren und können über die Folienfläche so verteilt werden, daß ausreichend viele Durchstiche gegeben sind, um genügend Feuchtigkeit hindurch zu lassen. Auch die Größe der Einstiche ist durch die Nadelstärke variierbar. Ferner kann durch entsprechendes Garn für eine erhöhte Feuchtigkeit gesorgt werden.

Das Versteppen der Matten hat zusätzlich den Vorteil, daß die Matte im ganzen fester wird und sich leichter verlegen läßt. Oft sind Pflanzungen an Böschungen oder anderen Schrägflächen, Unebenheiten usw. erwünscht. Auch hier ergeben sich keine Probleme beim Verlegen der Matte. Sowohl ihre Beschaffenheit wie auch ihre Standfestigkeit läßt ihre Verlegung in jeder Lage zu.

Es hat sich gezeigt, daß bei verlegten, nur versteppten Matten durch die Einstiche der Nähte Licht bis auf den Boden dringt, und daß durch diese Einstiche Unkräuter wachsen, die dann die Oberfläche der Matte überziehen. Um das zu verhindern, wird auf die untere versteppte, synthetische Schicht der Matte eine weitere Folie oder ein Vlies aufgebracht. Diese Folie bzw. das Vlies wird aufgeklebt oder aufgeschweißt. Als bevorzugt hat sich das Schweißverfahren bewiesen, insbesondere das Heißluftschweißen, wobei es auf geschlossene Schweißnähte nicht ankommt. Die abschließende synthetische Schicht bildet eine geschlossene lichtundurchlässige Abdeckung des Bodens, so daß ein Aufkeimen von Kräutern unmöglich ist. Um Wasser durchzulassen, wird bei der Verwendung einer lichtundurchlässigen Folie diese außerhalb des Bereiches der Steppnähte mit Schlitzen oder Löchern mit kleinstem Durchmesser versehen, so daß die Lichtundurchlässigkeit erhalten bleibt, wohl aber die Feuchtigkeitsdurchlässigkeit gewährleistet ist. Bei der Verwendung von Vlies ist eine weitere Bearbeitung nicht erforderlich, da dieses bereits so porös ist, daß Feuchtigkeit hindurchdringt, Licht dagegen nicht durchgelassen wird. Dies hat sich als besonders bewährt gezeigt.

Vlies hat sich auch als vorteilhaft beim Schichten auf organischem und synthetischem Material gezeigt, da die gesamte Fläche lichtundurchlässig, aber feuchtigkeitsdurchlässig ist. Es sind unter Umständen weniger Steppnähte erforderlich bzw. können diese weit auseinandergezogen werden.

Die Verrottung der Matte ist, wie bereits erwähnt, durch den Materialeinsatz beeinflußbar. Das organische Material kann den Vegetationsperioden angepaßt werden. Die Folie ist dementsprechend so auszuwählen, daß ihre Verrottung durch die UV-Bestrahlung gewährleistet ist. Das gleiche gilt auch für den Einsatz von Vlies. Da die obere Schicht verhältnismäßig schneller abbaut, wird eine darunter befindliche Folie in zunehmendem Maße der UV-Bestrahlung ausgesetzt. Je nach Stärke der Folie bestimmt sich die Verrottungszeit. Die Aufbaumatte nach der Erfindung gestattet durch das Versteppen der einzelnen Schichten den Einsatz von sehr dünnen Folien bzw. dünnem Vlies.

Die Aufgabe des synthetischen Materials wird in erster Linie darin bestehen, durch eine Lichtundurchlässigkeit das Aufkeimen von Unkräutern unter der Matte zu verhindern. Es kann aber auch Anwendungsbeispiele geben, wo eine Lichtdurchlässigkeit erforderlich wird. Hier wird dann eine Folie aus lichtdurchlässigem Material gewählt.

Die Erfindung ist an einem Zeichnungsbeispiel näher erläutert.

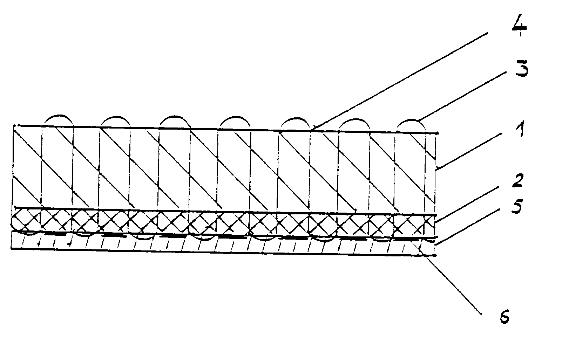

Die Figur zeigt den klassischen Aufbau einer Dreischichtmatte.

Es hat sich gezeigt, daß der einfachste, wirkungsvollste Aufbau in einer Dreischichtmatte besteht. Die oberste Schicht 1 besteht aus organischem Material, vorzugsweise aus Kokosfasern. Die erste synthetische Schicht 2 ist eine Folie oder ein Vlies und lichtundurchlässig. Diese beiden Schichten 1 und 2 sind miteinander versteppt, und zwar mit dem Faden 3. Der Abstand und die Größe der Einstiche 4 werden je nach Einsatz bestimmt.

Auf die synthetische Schicht 2 wird eine zweite synthetische Schicht 5 aufgeklebt oder aufgeschweißt. Diese Schicht 5 ist somit nicht versteppt und damit auch nicht mit Einstichen und Fäden versehen. Die Schweißnaht bzw. die Klebebahn 6 muß nicht durchgehend sein, es reichen Verbindungen in Abständen aus. Bei der Verwendung einer Folie als Schicht 5 ist diese außerhalb der Nähte 3; 4 zweckmäßig mit Schlitzen oder winzigen Löchern zu versehen, um die Feuchtigkeit durchzulassen.

Die Mulchmatte kann auch aus mehreren Schichten von organischem und synthetischem Material aufgebaut sein. Diese Schichten werden dann alle miteinander versteppt, wobei die unterste Schicht ein synthetisches Material sein muß. Auf dieses synthetische Material wird dann - wie zuvor beschrieben - ein weiteres synthetisches Material aufgeklebt oder aufgeschweißt.

In allen Fällen entsteht durch die unterste aufgeschweißte bzw. aufgeklebte synthetische Schicht ein solcher Abschluß der Matte, daß diese auf dem Boden aufliegende Schicht sicherstellt, daß ein Aufkeimen von Unkräutern unmöglich wird.

Die Matten werden zweckmäßig in Bahnen hergestellt, und zwar in Längen, die im aufgerollten Zustand der Matte gute Transportbedingungen erfüllen. Die Breite der Bahn ist dem Pflanzenabstand der Pflanzreihen angepaßt. Die Bahnen lassen sich dann nach Einbringen der Pflanzen in den Boden zwischen den Pflanzreihen so auslegen, daß sie an die Pflanzreihen stoßen und die Pflanzen durch Überlappung einschließen.

Sollten Pflanzenabstände erforderlich sein, die die Breite einer Matte unterschreiten, so können die Matten durch Einbringen eines Schlitzes zur Aufnahme der Pflanzen jederzeit vorbereitet werden.

Bei der organischen Schicht, die aus Pflanzenfasern besteht, haben sich besonders Stroh, Baumrinde, Jute oder Kokos bewährt.

## Patentansprüche

1. Mulchmatte zum Abdecken von Kulturen zur Verbesserung der Bodenverhältnisse und des Pflanzenwachstums und zur Verhinderung des Aufkeimens von Unkräutern, bestehend aus Schichten von organischem und synthetischem Material, die übereinander angeordnet und mittels Fäden miteinander verbunden sind, **dadurch gekennzeichnet**,
- daß die Matte aus einer Schicht von Pflanzenfasern und einer Schicht Folien oder Vlies besteht,
- daß diese beiden Schichten miteinander versteppt sind und
- daß eine weitere Folienschicht, die im Bereich außerhalb der Mattensteppnähte mit Löchern kleinen Durchmessers oder mit Schlitzen versehen ist, auf die vesteppte Matte unterseitig aufgebracht ist.

2. Mulchmatte nach Anspruch 1, **dadurch gekennzeichnet**, daß als unterste Schicht eine lichtundurchlässige Folie auf die versteppte Matte aufgeklebt oder mit dieser verschweißt ist.

3. Mulchmatte nach Anspruch 1, **dadurch gekennzeichnet**, daß als Pflanzenfaser vorzugsweise organische Stoffe wie Stroh, Baumrinde, Jute oder Kokos dienen.

## Claims

1. Mulch mat for covering cultures for improvement of the soil conditions and the plant growth and for preventing weeds from sprouting, comprising layers of organic and synthetic material in superimposed relationship and interconnected by means of threads, **characterized in**
- that the mat consists of a layer of vegetable fibres and a layer of sheets or non-woven webs,
- that said two layers are backstitched together, and
- that another sheet layer, which is provided with small-diameter holes or slits in the area outside the mat-stitching seams, is applied on the undersurface of the backstitched mat.

2. Mulch mat according to Claim 1, **characterized** in that a light-proof sheet is adhesively applied or welded to said backstitched mat as the lowermost layer.

3. Mulch mat according to Claim 1, **characterized in** that preferably organic materials such as straw, bark, jute or coir are used as said vegetable fibres.

## Revendications

1. Mat de paillis à couvrir des cultures afin d'améliorer la nature du sol et la croissance des plantes et pour éviter la germination des mauvaises herbes, qui comprend des couches en matières organiques et synthétiques disposées l'une stratifiée sur l'autre et interconnectées au moyen des fils, **caractérisé en ce**
- que le mat est composé d'une couche en fibres végétales et d'une couche à feuilles ou aux tissus non-tissés,
- que lesdites deux couches sont piquées l'une à l'autre, et
- qu'une autre couche à feuilles, qui présente des trous à petit diamètre ou des fentes dans la zone en dehors de la couture piquées du mat, est appliquée à la face inférieure du mat piqué.

2. Mat de paillis selon la revendication 1, **caractérisé en ce** qu'une feuille opaque est collée ou soudée sur ledit mat piqué en tant que la couche la plus basse.

3. Mat de paillis selon la revendication 1, **caractérisé en ce** que de préférence des matières organiques sont utilisées pour lesdits fibres végétales, comme de la paille, de l'écorce, du jute ou de fibre de coco.
